# EUROPEAN PATENT APPLICATION

(11) **EP 4 741 454 A1**
(43) Date of publication of application: **13.05.2026**
(21) Application number: 24212350.3
(22) Date of filing: 12.11.2024
(51) Int. Cl.: C08K 5/098, C08L 23/0892, C08J 3/24, H01B 3/44, C08K 3/22, C08K 3/26

(54) **SUSTAINABLE CROSSLINKING OF FLAME RETARDANT POLYOLEFIN COMPOSITION**

(71) Applicant: Borealis GmbH, 1020 Vienna (AT)
(72) Inventor: HESSELGREN, Jessica, 444 86 Stenungsund (SE); GSCHNEIDTNER, Tina, 444 86 Stenungsund (SE); PIEL, Tanja Maria, 4021 Linz (AT); SMEDBERG, Annika, 444 86 Stenungsund (SE); PRIETO CONGOST, Oscar, 444 86 Stenungsund (SE)
(74) Representative: TBK

(57) **Abstract**

The present invention provides a flame retardant polyolefin composition comprising at least one crosslinkable polyolefin base resin containing hydrolysable silane groups (A), at least one silanol condensation catalyst (B) being an inorganic tin (II) compound in which a tin atom has no covalent bond to a carbon atom, and at least one flame retardant inorganic filler (C), which can be efficiently crosslinked even at ambient temperature. Moreover, the present invention provides the use of tin (II) oleate, tin (II) neodecanoate or mixtures thereof for crosslinking a polyolefin composition containing at least one crosslinkable polyolefin base resin containing hydrolysable silane groups, under ambient conditions and a process for producing a crosslinked article and a cable or wire.

## Description

### Field of the invention

The present invention relates to a flame retardant polyolefin composition (FRPC) comprising at least one crosslinkable polyolefin base resin containing hydrolysable silane groups (A), wherein the polyolefin base resin is polyethylene or polypropylene, at least one silanol condensation catalyst (B) being an inorganic tin (II) compound in which a tin atom has no covalent bond to a carbon atom, and at least one flame retardant inorganic filler (C).

### Technical background

Crosslinking is a known method to impart improved mechanical and chemical heat resistance properties to polyolefin compositions used in the production of wires or cables. Crosslinking may be performed by condensation of silanol groups contained in the polyolefin composition, which can be obtained by hydrolysis of silane groups.

Another desirable feature of polyolefin compositions is flame retardancy. However, flame retardants typically suffer from either limitations in mechanical properties, such as tensile properties and tear strength, or in flame retardant (FR) properties. As such, there is a growing demand for flame retardant polyolefin compositions that can fulfil both mechanical and FR properties.

At present, a commonly used catalyst for crosslinking flame retardant polyolefin compositions is dioctyltin dilaurate (DOTL), which, owing to its health and environmental hazardousness, is facing increasing regulatory pressure and may be phased out in the near future. Therefore, although the catalytic performance of organic tin catalysts such as dioctyltin dilaurate (DOTL) is good, those catalyst needs replacement for environmental and toxicity reasons.

An environmental friendly catalyst for crosslinking condensation of silanol groups contained in the crosslinkable polyolefin compositions include organic acid-based catalysts, such as sulfonic acid-based catalysts. However, flame retardants, as well as other additives, commonly used in the field of flame retardant polyolefin compositions include basic compounds, that is, compounds that tend to react with acidic compounds by accepting protons, which can interfere with the crosslinking reactivity of the silanol crosslinking catalyst. Hence, organic acid-based catalysts, can be neutralized under such conditions, which impairs with the desired catalytic crosslinking activity.

EP2876132 A1 relates to a crosslinkable polyethylene composition comprising inorganic tin(II) compounds in which a tin atom has no covalent bond to a carbon atom. The Examples therein disclosed however do not include flame retardant polyethylene compositions and polyethylene compositions crosslinked at ambient temperature.

EP2752243 A1 relates to the use of tin salt of neodecanoic acid and its solutions in coatings and paints, adhesives, sealants and elastomers and in the production of polyurethane systems (PUR systems).

EP2562209 relates to a cable comprising a polymer composition comprising a LDPE bearing hydrolysable silane groups and a silanol condensation catalyst, the silanol condensation catalyst being metal acetylacetonate (acac) complexes. EP2562768 A1 relates to a cable comprising a polymer composition comprising a polyolefin bearing hydrolysable silane groups and a silanol condensation catalyst, the silanol condensation catalyst being a sterically hindered amine. WO2011/160964 A1 relates to a cable comprising a polymer composition comprising a polyolefin bearing hydrolysable silane groups and a silanol condensation catalyst, the silanol condensation catalyst being a zirconium, titanium or other lewis acid complexes.

However, none of the aforementioned inventions was tested with flame retardant polyolefins composition containing flame retardant inorganic filler and thus, owing to the possible impediment to the catalytic activity represented by the flame retardant inorganic filler, there is a need for a robust silanol condensation catalyst which is both environmentally friendly and capable of crosslinking polyolefin compositions in the presence of basic compounds such as flame retardant inorganic filler. Furthermore, there is also a need for such robust catalyst to be able to operate at lower temperatures and even ambient conditions, so as to simplify the crosslinking process and reduce costs and environmental impact.

### Summary of the invention

It is the object of the present invention to provide a flame retardant polyolefin composition (FRPC) which can be efficiently crosslinked in the presence of flame retardant inorganic filler, and that can be crosslinked at lower temperate or even ambient conditions, whilst retaining desirable properties such as hot set properties.

The inventors of the present invention surprisingly found that the object can be solved by providing a polyolefin composition comprising at least one crosslinkable polyolefin base resin containing hydrolysable silane groups (A), wherein the polyolefin base resin is polyethylene or polypropylene, at least one silanol condensation catalyst (B), and at least one flame retardant inorganic filler (C), wherein the silanol condensation catalyst is an inorganic tin (II) compound in which the tin atom has no covalent bond to a carbon atom.

By means of the above-identified configuration, in particular the use of a silanol condensation catalyst being an inorganic tin (II) compound in which the tin atom has no covalent bond to a carbon atom, which is less toxic that conventional DOTL and which shows robust silanol condensation catalytic activity even in the presence of flame retardant inorganic filler, it is unexpectedly possible to provide a flame retardant composition which can be efficiently crosslinked, even at ambient conditions.

The present invention further relates to a process for producing a crosslinked article applying the flame retardant polyolefin composition, and a crosslinked article comprising the flame retardant polyolefin composition.

The present invention further relates to a use of tin (II) oleate, tin (II) neodecanoate or mixtures thereof, for crosslinking a polyolefin composition containing at least one crosslinkable polyolefin base resin containing hydrolysable silane groups, at ambient conditions or under application of heat. That is, it has been found out that the specific catalysts are unexpectedly able to crosslink a polyolefin composition containing at least one crosslinkable polyolefin base resin containing hydrolysable silane groups even at ambient conditions.

Preferred embodiments of the invention are depicted in the dependent claims and a detailed description of the invention is provide in the following description.

### Detailed Description

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

In the following amounts are given in % by weight (wt.-%) unless it is stated otherwise.

When reference is made to a method or step or stage or reactor or apparatus (or similar) "for" producing or forming a certain material (e.g. polymer fraction) or "for" performing a certain action, this shall be understood that this step (or stage or reactor, etc.) is adapted to (configured to) produce (or form) that certain material or to perform this certain action.

### Flame retardant polyolefin composition (FRPC)

The FRPC according to the present invention is characterized by comprising at least one crosslinkable polyolefin base resin containing hydrolysable silane groups (A), wherein the polyolefin base resin is polyethylene or polypropylene, at least one silanol condensation catalyst (B), and at least one flame retardant inorganic filler (C), wherein the silanol condensation catalyst is an inorganic tin (II) compound in which a tin atom has no covalent bond to a carbon atom.

That is, the FRPC in accordance with the present invention essentially comprises the at least one crosslinkable polyolefin base resin containing hydrolysable silane groups (A), the at least one silanol condensation catalyst (B), and the at least one flame retardant inorganic filler (C), but may further contain other components such as additive(s) and polymer(s). The requirement applies that the components (A), (B) and (C) and the other optional component(s), as far as being present, add up to 100 wt.-%. The term "essentially comprises" indicates the proviso that the total mass of components (A), (B) and (C), based on the total mass of the FRPC, is 70 wt.-% or more, and the total mass of components (A), (B) and (C) may even be 75 wt.-% or more, 80 wt.-% or more, or 85 wt.-% or more. In addition, the at least one crosslinkable polyolefin base resin containing hydrolysable silane groups (A) represents a polymer component being present in the highest amount among all individual polymer components present in the FRPC. This ensures favorable robust and environmental friendly crosslinking of the FRPC of the present invention even in the presence of the flame retardant inorganic filler and allows crosslinking at lower temperatures or even ambient conditions.

The FRPC according to the present invention preferably contains, based on the total mass of the FRPC, the at least one crosslinkable polyolefin base resin containing hydrolysable silane groups (A) in an amount of 10.0 to 75.0 wt.-%, more preferably 15.0 to 70.0 wt.-%, the at least one silanol condensation catalyst (B) in an amount of 0.01 to 2.0 wt.-%, more preferably 0.02 to 1.0 wt.-%, and the at least one flame retardant inorganic filler (C) in an amount of 15.0 to 70.0 wt.-%, more preferably 20.0 to 65.0 wt.-%. In this regard, it is to be understood that wherever various ranges are indicated, the lower and upper limit(s) of the various ranges can be suitable combined to form another range and this general principle applies throughout the entire application.

Within these ranges, the crosslinking effects of the present invention are more pronounced and/or there is achievement is facilitated.

According to a preferred embodiment of the present invention (preferred embodiment one), the FRPC is a composition containing, based on the total mass of the FRPC, (A) the at least one crosslinkable polyolefin base resin containing hydrolysable silane groups in an amount of 45.0 to 75.0 wt.-%, preferably 50.0 to 70.0 wt.-%, (B) the at least one silanol condensation catalyst in an amount of 0.05 to 2.0 wt.-%, preferably 0.1 to 1.0 wt.-%, and (C) the at least one flame retardant inorganic filler in an amount of 15.0 to 40.0 wt.-%, preferably 20.0 to 35.0 wt.- %, wherein the at least one flame retardant inorganic filler is a carbonate metal salt, preferably calcium carbonate. In this case, by using a carbonate metal salt as the at least one flame retardant inorganic filler, it is possible to lower the amount of the inorganic filler. In preferred embodiment one, the at least one crosslinkable polyolefin base resin containing hydrolysable silane groups may preferably be a terpolymer comprising a butyl acrylate monomer, such as an ethylene butyl acrylate (EBA)-based copolymer containing hydrolysable silane groups. The hydrolysable silane groups may preferably be selected from trimethoxy silane groups, triethoxysilane groups and a mixture thereof, more preferably trimethoxy silane groups, which can be introduced by copolymerizing vinyl trimethoxysilane, vinyl triethoxysilane or a mixture thereof.

According to another preferred embodiment of the present invention (preferred embodiment two), the FRPC is a composition containing, based on the total mass of the FRPC, (A) the at least one crosslinkable polyolefin base resin containing hydrolysable silane groups in an amount of 10.0 to 35.0 wt.-%, preferably 15.0 to 30.0 wt.-%, (B) the silanol condensation catalyst in an amount of 0.01 to 1.0 wt.- %, preferably 0.02 to 0.75 wt.-%, and (C) the at least one flame retardant inorganic filler in an amount of 40.0 to 70.0 wt.-%, preferably 45.0 to 65.0 wt.- %, wherein the at least one flame inorganic filler is a hydroxide metal salt, preferably aluminum hydroxide or magnesium hydroxide. In this another preferred embodiment two, the at least one crosslinkable polyolefin base resin containing hydrolysable silane groups may preferably be a terpolymer comprising a methyl acrylate monomer, such as an ethylene methyl acrylate (EMA)-based copolymer containing hydrolysable silane groups. The hydrolysable silane groups may preferably be selected from trimethoxy silane groups, triethoxysilane groups and a mixture thereof, more preferably trimethoxy silane groups, which can be introduced by copolymerizing vinyl trimethoxysilane, vinyl triethoxysilane or a mixture thereof.

Notably, the at least one silanol condensation catalyst (B) may be added to the FRPC as such (neat) or may be added as a masterbatch, in which the at least one silanol condensation catalyst (B), and optionally further additive(s), are dispersed in a carrier polymer, e.g. a polyolefin matrix, in a concentrated form. The masterbatch can comprise the silanol condensation catalyst (B) in an amount of 0.3 to 15.0 wt.-%, preferably 0.7 to 10.0 wt.-%, based on the total mass of the masterbatch. Further, the masterbatch containing the at least one silanol condensation catalyst (B) can be compounded with the components (A) and (C), an optional other component(s), in an amount of 1.0 to 10.0 wt.-%, preferably 2.0 to 8.0 wt.-%, based on the total mass of the FRPC. Within these ranges, the crosslinking effects of the present invention are more pronounced and/or there is achievement is facilitated.

As noted above, in addition to the essential components (A) to (C), the FRPC according to the present invention may further contain other component(s) such as additive(s) and polymer(s). That is, in addition to the crosslinkable polyolefin base resin containing hydrolysable silane groups (A), the FRPC may comprise other polymers as appropriate, to modify the properties of the composition in its desired application. Such polymers include the carrier polymer of the masterbatch as described herein. Other examples include for instance high density polyethylene (HDPE), elastomers and compatibilizers or adhesive resins, such as modified polyolefins (e.g. modified by anhydride functionality).

In this regard, the total content of polymer components other than the at least one crosslinkable polyolefin base resin containing hydrolysable silane groups (A), based on the total mass of the FRPC, if present, is usually 30.0 wt.-% or less, preferably 25.0 wt.-% or less, or 20.0 wt.-% or less. The at least one crosslinkable polyolefin base resin containing hydrolysable silane groups (A) represents the polymer component being present in the highest amount among all individual polymer components present in the FRPC.

The FRPC may optionally further include additive(s). Said additive(s) are preferably selected from the group consisting of slip agent(s), antistatic agent(s), UV-stabilizer(s), antioxidant(s), scorch retardant(s), metal deactivator(s), and colorant(s), and mixtures thereof. The FRPC of the present invention preferably contains at least one of antioxidant(s), UV-stabilizer(s), metal deactivator(s) and scorch retardant(s), and more preferably includes at least antioxidant(s), UV-stabilizer(s), metal deactivator(s) and scorch retardant(s). In this regard, the total content of the additive(s), based on the total mass of the FRPC, if present, is usually 7.0 wt.-% or less, preferably 5.0 wt.-% or less, more preferably 2.0 wt.-% or less.

A skilled person and the present invention appreciates modifications e.g. in that the FRPC may comprise optional component(s) other than the above polymer(s) and additive(s), such as flame retardant(s) other than compound (C), nucleating agent(s), utilization agent(s), filler(s) and coloring agent(s) including carbon black or mica, anti-block agent(s), processing aid(s), and modifier(s) commonly known in the art, as long as the crosslinking of the FRPC is not impaired. Usually, the amount thereof, if present, does not exceed 10.0 wt.-%, or is 7.0 wt.-% or less, based on the total mass of the FRPC. Thus, care must be taken not to add any optional component(s), which interfere with attaining the crosslinking of the FRPC composition.

The compounding of the components to yield the FRPC may be performed by any known compounding process, including extruding the final product with a screw extruder or a kneader.

### Crosslinkable polyolefin base resin containing hydrolysable silane groups (A)

The FRPC essentially comprises the at least one crosslinkable polyolefin base resin containing hydrolysable silane groups (A), wherein the polyolefin base resin is polyethylene or polypropylene, preferably polyethylene. In the present invention, polyethylene and polypropylene refer to homo- and copolymers of the respective monomers.

As stated above, the FRPC according to the present invention preferably contains the at least one crosslinkable polyolefin base resin containing hydrolysable silane groups (A) in an amount of 10.0 to 75.0 wt.-%, more preferably 15.0 to 70.0 wt.- %, based on the total mass of the FRPC. That is, the FRPC may contain one or more crosslinkable polyolefin base resins containing hydrolysable silane groups and the amount refers to the total amount thereof. To simplify the composition and the compounding thereof, only one crosslinkable polyolefin base resin containing hydrolysable silane groups may preferably be used.

The hydrolysable silane groups, preferably trimethoxy silane groups, triethoxysilane groups, or a mixture thereof, more preferably trimethoxy silane groups, may be introduced into the polyolefin of component (A) by copolymerization of olefin (ethylene or propylene) with at least silane group(s) containing comonomer(s) or by grafting silane group(s) containing compound(s) to the polyolefin. Grafting is preferably effected by radical reaction, e.g. in the presence of a radical forming agent (such as peroxide). Both techniques are well known in the art and a more detailed description about a suitable crosslinkable polyolefin base resin containing hydrolysable silane groups (A) can be found in EP2562209 A1 (with respect to polyolefine (a)), EP2592768 A1 (with respect to polyolefine (a)) and EP2876132 A1 (with respect to (A) crosslinkable polyethylene with hydrolysable groups).

Preferably, the polyolefin bearing hydrolysable silane groups (a) is a copolymer of olefin (ethylene or propylene) with a silane group(s) bearing comonomer and, optionally, with other comonomer(s). As well known, "comonomer" refers to copolymerizable comonomer units.

The crosslinkable polyolefin base resin containing hydrolysable silane groups (A) is more preferably a terpolymer comprising an olefin (ethylene or propylene), a monomer containing hydrolysable silane groups and a polar comonomer. Such terpolymers are described e.g. in EP2074172 A1, and may be produced by copolymerization of olefin monomers, unsaturated monomers containing silane groups and unsaturated monomers containing polar groups.

Examples of suitable polar comonomers, when present, include (a) vinyl carboxylate esters, such as vinyl acetate and vinyl pivalate, (b) (meth)acrylates, such as methyl(meth)acrylate, ethyl(meth)acrylate, butyl(meth)acrylate and hydroxyethyl(meth)acrylate, (c) olefinically unsaturated carboxylic acids, such as (meth)acrylic acid, maleic acid and fumaric acid, (d) (meth)acrylic acid derivatives, such as (meth)acrylonitrile and (meth)acrylic amide, and (e) vinyl ethers, such as vinyl methyl ether and vinyl phenyl ether.

The polar comonomer is preferably an alkyl (meth)acrylate, more preferably an alkyl acrylate. The alkyl acrylate preferably has an alkyl chain with 1 to 4 carbon atoms, that is, particularly suitable polar comonomers include methyl acrylate, ethyl acrylate and butyl acrylate.

The content of polar comonomer is preferably in the range of 5.0 to 35.0 wt.-% and more preferably in the range of 7.5 to 30.0 wt.-% based on the total mass of the crosslinkable polyolefin base resin containing hydrolysable silane groups (A).

The silane group(s) containing comonomer for copolymerizing silane groups or the silane group(s) containing compound for grafting silane groups to produce component (A) is preferably an unsaturated silane compound/comonomer represented by the formula (I):

R¹SIR²_{q}Y_{3-q} (I)

wherein R¹ is an ethylenically unsaturated hydrocarbyl, hydrocarbyloxy or (meth)acryloxyhydrocarbyl group, R² is independently an aliphatic saturated hydrocarbyl group, Y which may be the same or different, is a hydrolysable organic group, preferably alkoxy, more preferably ethoxy or methoxy, and q is 0, 1 or 2. As evident to a skilled person, the choice of the suitable unsaturated silane compound/comonomer depends inter alia on the desired crosslinking effect, e.g. desired crosslinking speed, which can be adjusted e.g. with the desired accessibility of the silane groups to the crosslinking catalyst. Most preferred compounds are vinyl trimethoxysilane, vinyl bismethoxyethoxysilane or vinyl triethoxysilane.

The crosslinkable polyolefin base resin containing hydrolysable silane groups (A) preferably contains the hydrolysable silane groups (i.e. the silane group(s) containing comonomer/compound) in an amount of 0.1 to 3.0 wt.-%, more preferably 0.5 to 2.5 wt.-%, based on the total mass of the component (A). This range ensures favorable crosslinking properties of the FRPC of the present invention.

### Silanol condensation catalyst (B)

The FRPC essentially comprises the at least one silanol condensation catalyst (B), wherein the silanol condensation catalyst is an inorganic tin (II) compound in which the tin atom has no covalent bond to a carbon atom.

As stated above, the FRPC according to the present invention preferably contains the at least one silanol condensation catalyst (B) in an amount of 0.01 to 2.0 wt.- %, preferably 0.02 to 1.0 wt.-%, based on the total mass of the FRPC. That is, the FRPC may contain one or more silanol condensation catalyst (B) (i.e. inorganic tin (II) compound) and the amount refers to the total amount thereof. Within these ranges, the crosslinking effects of the present invention are more pronounced and/or there is achievement is facilitated. To simplify the composition, the compounding and crosslinking thereof, only one silanol condensation catalyst (B) may preferably be used.

The at least one silanol condensation catalyst (B) is preferably a tin (II) salt of a carboxylic acid, and the at least one silanol condensation catalyst (B) is more preferably represented by the formula (II):

[R¹COO]Sn[OOCR²] (II)

wherein R¹ and R² independently represent a straight or branched, staturated or unsaturated hydrocarbyl group having 2 to 30 carbon atoms, preferably 8 to 20 carbon atoms.

A non-exhaustive list of examples of the silanol condensation catalyst (B) defined by formula (II) includes tin (II) 2-ethylhexanoate, tin (II) octanoate, tin (II) neodecanoate, tin (II) decanoate, tin (II) laurate, tin (II) myristate, tin (II) palmitate, tin (II) oleate, tin (II) stearate and tin (II) icosanoate. In terms of efficiently and robust crosslinking the FRPC even in the presence of basic compounds, such as flame retardant inorganic filler, even under ambient conditions, it is particularly beneficial for the at least one silanol condensation catalyst to be selected from tin (II) oleate and tin (II) neodecanoate, and may also be a mixture thereof. Using just one silanol condensation catalyst facilitates and simplified the composition and may therefore be preferred.

The at least one silanol condensation catalyst (B) may be added to the FRPC as such (neat) or may be added as a masterbatch, in which the at least one silanol condensation catalyst (B), and optionally further additive(s), are dispersed in a carrier polymer, e.g. a polyolefin matrix, in a concentrated form. The silanol condensation catalyst containing masterbatch may comprise the polyolefin matrix polymer in an amount of 50.0 wt.-% or more, 60.0 wt.-% or more, 70.0 wt.-% or more, or even 80 wt.-% or more, and the at least one silanol condensation catalyst (B). It is possible to only add one silanol condensation catalyst (B), and optionally additive(s), into the masterbatch. This is preferred as it simplifies the compounding process and minimizes chance for errors.

The matrix polymer is preferably a polyolefin, more suitable a polyethylene, which may be a homo- or copolymer of ethylene, e.g. low density polyethylene, or polyethylene-methyl-, -ethyl, or -butyl-acrylate copolymer containing 1 to 50 wt.- % of the acrylate, and mixtures thereof. The carrier polymer of the masterbatch (matrix polymer) may preferably be a polyolefin resin similar to the polyolefin base resin (A) but does not contain hydrolysable silane groups.

As stated above, in the masterbatch, the compound(s) to be added to the crosslinkable polyolefin base resin containing hydrolysable silane groups (A) are contained in concentrated form, i.e. in a much higher amount than in the final composition (FRPC). The masterbatch can comprise the at least one silanol condensation catalyst (B) in an amount of 0.3 to 15.0 wt.-%, preferably 0.7 to 10.0 wt.-%, based on the total mass of the masterbatch. Furthermore, the masterbatch can also contain additive(s), as indicated herein, to be added into the final composition (FRPC). The amount of additive(s) contained in the masterbatch can be up to 15 wt.-% or can be 10 wt.-% or less. In this case, the masterbatch can be compounded with the components (A) and (C), an optional other component(s), in an amount of 1.0 to 10.0 wt.-%, preferably 2.0 to 8.0 wt.-%, based on the total mass of the FRPC.

Compounding may be performed by any known compounding process, including extruding the final product with a screw extruder or a kneader.

### Flame retardant inorganic filler (C)

The FRPC essentially comprises the at least one flame retardant inorganic filler (C) and represents an essential component to provide desired flame retardancy.

As stated above, the FRPC according to the present invention preferably contains the least at least one flame retardant inorganic filler (B) in an amount of 15.0 to 70.0 wt.-%, preferably 20.0 to 65.0 wt.-%. That is, the FRPC may contain one or more flame retardant inorganic filler (B) and the amount refers to the total amount thereof. To simplify the composition and its compounding, only one flame retardant inorganic filler (B) may preferably be used.

Inorganic fillers are typically used as flame retardants to produce flame retardant polyolefin compositions owing to their environmental friendliness, low toxicity and wide availability. The type of the flame retardant inorganic filler is not specifically limited, but hydroxide metal salts and carbonate metal salts are generally preferred, owing to their advantageous flame retardant properties and compatibility with polyolefin compositions. Preferably, the metal salts are calcium salts, aluminum salts, or magnesium salts. Particularly preferred flame retardant inorganic fillers are calcium carbonate, aluminum hydroxide (aluminum trihydroxide) and magnesium hydroxide (magnesium dihydroxide).

More specifically, a carbonate metal salt, such as calcium and/or magnesium carbonate, preferably calcium carbonate, represents a suitable fire retardant inorganic filler, which can impart fire retardancy even if used at rather low contents as specified herein with respect to preferred embodiment one as indicated above.

Such flame retardant inorganic filler(s) are commercially available as ground or precipitated compounds, which differ in terms of purity, particle size and surface treatment. Suitable calcium carbonate-based flame retardant filler are e.g. available from Omya GmbH as Omya^{®} EXH1 SP. Suitable aluminum hydroxide-based flame retardant filler is e.g. available from Nabaltec AG as Apyral^{®} 40CD, or available from Huber Advanced Materials as MARTINAL^{®} OL-104 LEO. Suitable magnesium hydroxide-based flame retardant filler is e.g. available from Kyowa chemical industries as Kisuma^{®} 5JL, available from Huber Advanced Materials as Magnifin^{®} H-5 A, available from ICL Industrial as FR-20 (coated grade), available from KMT Industrial as XK-10000/99, and available from Konoshima Chemical Co., Ltd. as MAGSEEDS^{®} S. However, the inorganic filler in the present invention is not particularly limited in this regard, and the skilled person may select a specific type as appropriate depending on the specific application and individual need.

### Other component(s)

In addition to the essential components (A) to (C), the FRPC of the present invention may contain other components such as additive(s) and polymer(s).

That is, in addition to the crosslinkable polyolefin base resin containing hydrolysable silane groups (A), the FRPC may comprise polymers other than the at least one crosslinkable polyolefin base resin containing hydrolysable silane groups (A) as appropriate, to modify the properties of the composition in its desired application. Such polymers also include the carrier polymer of the masterbatch as described above. Other examples include for instance high density polyethylene (HDPE), elastomers and compatibilizers or adhesive resins, such as modified polyolefins (e.g. modified by anhydride functionality). However, the present invention is not particularly limited in this regard, and the skilled person may select a specific type as appropriate depending on the specific application and individual need. Suitable polymer such as high density polyethylene (HDPE), elastomers and compatibilizers or adhesive resins are for instance discussed in EP4166609 A1 and WO 2021/111006 A1.

In this regard, the total content of polymer components other than the at least one crosslinkable polyolefin base resin containing hydrolysable silane groups (A), based on the total mass of the FRPC, if present, is usually 30.0 wt.-% or less, preferably 25.0 wt.-% or less, or 20.0 wt.-% or less. The at least one crosslinkable polyolefin base resin containing hydrolysable silane groups (A) however represents the polymer component being present in the highest amount among all individual polymer components present in the FRPC.

The FRPC may optionally further include additive(s). Said additive(s) are preferably selected from the group consisting of slip agent(s), antistatic agent(s), UV-stabilizer(s), antioxidant(s), scorch retardant(s), metal deactivator(s), and colorant(s), and mixtures thereof. The FRPC of the present invention preferably contains at least one of antioxidant(s), UV-stabilizer(s), metal deactivator(s) and scorch retardant(s), and more preferably includes at least antioxidant(s), UV-stabilizer(s), metal deactivator(s) and scorch retardant(s). In this regard, the total content of the additive(s), based on the total mass of the FRPC, if present, is usually 7.0 wt.-% or less, preferably 5.0 wt.-% or less, more preferably 2.0 wt.-% or less.

Since the FRPC of the present invention is crosslinked, it is particularly preferred that the FRPC contains at least one scorch retardant. The at least one scorch retardant may be a silane-containing scorch retardant as described e.g. in EP0449939 A1. In particular, the silane-containing scorch retardant is preferably a trialkoxyalkylsilane, that is a silane in which the silicon atom is connected with three alkoxy groups and one alkyl chain. A non-exhaustive list of particularly suitable trialkoxyalkylsilanes usable as scorch retardant include vinyltrimethoxysilane, triethoxyoctyl silane and hexadecyltrimethoxysilane. Most preferably, hexadecyltrimethoxysilane (HDTMS) is used as scorch retardant.

If present, the at least one scorch retardant is contained in the FRPC composition in an amount from 0.3 wt.-% to 5.0 wt.-%, preferably 0.3 wt.-% to 3.5 wt.-% based on the total mass of the FRPC.

The FRPC preferably comprises antioxidant(s) comprising a sterically hindered phenol group and/or aliphatic sulphur groups, both may act synergistically together. Such compounds are disclosed in EP 1 254 923 A1 as particularly suitable antioxidants for stabilization of polyolefin containing hydrolysable silane groups. Examples of preferred antioxidants include, but are not limited to, Irganox^{®} 1010 (pentaerythrityl-tetrakis(3-(3',5'-di-tert.butyl-4-hydroxyphenyl)-propionate), Irganox^{®} 1024 (N,N'-bis (3(3',5'-di-tert.butyl-4'-hydroxyphenyl)propionyl) hydrazine), TMB6 (4,4'-thiobis (2-tert.butyl-5-methylphenol), Naugard^{®} 445 (4,4'-bis(1,1'-dimethylbenzyl)diphenylamine), Songnox^{®} 1076 (octadecyl 3-(3',5'-di-tert.butyl-4-hydroxyphenyl)propionate).

Other preferred antioxidants are disclosed for instance in WO 2005/003199 A1. Preferably, the antioxidant(s) is present in the FRPC in an amount of 0.01 to 3.0 wt.-%, more preferably 0.05 to 2.0 wt.-%, and most preferably 0.08 to 1.5 wt.-%, based on the total mass of the FRPC.

The FRPC preferably comprises UV-stabilizer(s), such as, for example, ultraviolet light absorbers (UVA) and hindered-amine light stabilizers (HALS) known in the art. Examples of preferred UV-stabilizer(s) include, but are not limited to Chimassorb^{®} 944 FD (Poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino))), Tinuvin^{®} 622 SF (Dimethyl succinate polymer with 4-hydroxy-2,2,6,6-tetramethyl-1-piperidine ethanol) and mixtures thereof (Tinuvin^{®} 783 FDL). Also antioxidant(s) may additionally offer UV-stabilizing effect and can therefore be preferably used, such as e.g. pentaerythritol tetrakis [3-[3,5-di-tert-butyl-4-hydroxyphenyl] propionate (CAS-No. 6683-19-8, Irganox 1010). Preferably, the UV-stabilizer(s) is present in the FRPC in an amount of 0.01 to 3.0 wt.-%, more preferably 0.05 to 2.0 wt.-%, and most preferably 0.08 to 1.5 wt.-%, based on the total mass of the FRPC.

The FRPC preferably comprises metal deactivator(s), such as, for example, hydrazine-based compounds, and various thiadiazole and triazole derivatives known in the art. Also antioxidant(s) may additionally offer metal deactivator properties if containing a moiety with radical scavenging properties to provide both functions. Preferably, the metal deactivator(s) is present in the FRPC in an amount of 0.01 to 1.5 wt.-%, more preferably 0.02 to 1.0 wt.-%, and most preferably 0.05 to 0.7 wt.-%, based on the total mass of the FRPC.

A skilled person and the present invention appreciates modifications e.g. in that the FRPC may comprise optional component(s) other than the above polymer(s) and additive(s), such as flame retardant(s) other than compound (C), nucleating agent(s), utilization agent(s), filler(s) and coloring agent(s) including carbon black or mica, anti-block agent(s), processing aid(s), and modifier(s) commonly known in the art, as long as the crosslinking of the FRPC is not impaired. Usually, the amount thereof, if present, does not exceed 10.0 wt.-%, or is 7.0 wt.-% or less, based on the total mass of the FRPC. Thus, care must be taken not to add any optional component(s), which interfere with attaining the crosslinking of the FRPC composition.

Specifically, the FRPC may preferably contain a silicon fluid and/or silicon gum as flame retardant(s) other than compound (C), such ones being selected from the group consisting of polysiloxane, preferably polydimethylsiloxane, and siloxanes containing alkoxy or alkyl functional groups and mixtures thereof known in the art and described for instance in EP4166609 A1 and WO 2021/111006 A1. In addition to component (C), the silicon fluid and/or silicon gum can provide the desired flame retardant property. The silicon fluid and/or silicon gum may be used as commercially available and may be in the form of a masterbatch.

### Use of tin (II) oleate, tin (II) neodecanoate or mixtures thereof

Another aspect of the present invention relates to the use of tin (II) oleate, tin (II) neodecanoate or mixtures thereof for crosslinking a polyolefin composition containing at least one crosslinkable polyolefin base resin containing hydrolysable silane groups at ambient conditions or under application of heat. In the present disclosure, ambient conditions refers to a temperature of 23°C±5°C, preferably 23°C±2°C or 23°C and a relative humidity of 50%±10%, preferably 50%±5% or 50%, and application of heat refers to a temperature in a range of 60°C to 90°C, preferably 70°C±5°C.

That is, it has been found out that tin (II) oleate, tin (II) neodecanoate or mixtures thereof are especially suitable in terms of efficiently and robust crosslinking a crosslinkable polyolefin base resin containing hydrolysable silane groups even at ambient conditions. Preferably, at least tin (II) neodecanoate, more preferably only tin (II) neodecanoate, is used for crosslinking, because the crosslinking performance under ambient conditions is especially favorable.

The at least one crosslinkable polyolefin base resin containing hydrolysable silane groups comprised in the polyolefin composition is preferably polyethylene or polypropylene, more preferably polyethylene. Particularly preferably, the at least one crosslinkable polyolefin base resin containing hydrolysable silane groups corresponds to the compound (A) of the FRPC as discussed above. For details regarding the compound (A) that is preferably applied in the polyolefin composition related to the use of the present invention, it is referred to the above said to avoid repetition.

The polyolefin composition related to the use of the present invention is not particularly limited, as long as it is a polyolefin composition containing at least one crosslinkable polyolefin base resin containing hydrolysable silane groups. That is, the polyolefin composition related to the use of the present invention does not necessarily contain a flame retardant inorganic filler, as it has been found out the use of tin (II) oleate, tin (II) neodecanoate or mixtures thereof for crosslinking a polyolefin composition containing at least one crosslinkable polyolefin base resin containing hydrolysable silane groups can proceed efficiently even at ambient temperature regardless of the presence of the flame retardant inorganic filler.

However, the polyolefin composition related to the use of the present invention preferably contains at least one flame retardant inorganic filler and may further contain at least one scorch retardant, if it is the aim to provide a flame retardant polyolefin composition. Particularly preferably, the at least one flame retardant inorganic filler and the at least one scorch retardant corresponds to the compound (C) and the scorch retardant of the FRPC as discussed above. For details regarding the compound (C) and/or the scorch retardant that is/are preferably applied in the polyolefin composition related to the use of the present invention, it is referred to the above-said to avoid repetition.

In addition, the polyolefin composition related to the use of the present invention can preferably contain other component(s) as used and discussed in relation to the FRPC of the present invention. For details regarding the other component(s) that are preferably applied in the polyolefin composition related to the use of the present invention, it is referred to the above said (see section other component(s)) to avoid repetition.

Accordingly, the use of the present invention preferably results in the above FRPC of the present invention in which the component (B) is tin (II) oleate, tin (II) neodecanoate or mixtures thereof, more preferably only tin (II) neodecanoate. For details regarding the constituents and ranges of the FRCP, it is referred to the above said to avoid repetition.

### Process for producing a crosslinked article

Another aspect of the present invention relates to a process for producing a crosslinked article, involving the steps of providing the above FRPC, extruding the composition (FRPC) to form an article, optionally, cooling down the article, and crosslinking the article either under application of heat or at ambient conditions to form a crosslinked article. The article can preferably be a cable or wire, which terms are used interchangeably in the present invention.

The FRPC can be prepared by mixing together the above respective essential components (A) to (C) as well as other optional component(s) as described above using any suitable means such as conventional compounding, mixing or blending apparatus, e.g. Banbury^{®} mixer, a 2-roll rubber mill, Buss-co-kneader, a single screw extruder with special mixing segments or a twin screw extruder. Generally, the FRPC will be prepared by blending them together at a temperature, which is sufficiently high to soften the polymer components. The FRPC can for instance be obtained by mixing the essential components (A) to (C), and other optional component(s) such as polymer(s) and additive(s) before, during or after melting the polymer component(s) including at least component (A), and/or the other component(s) may in the individual case be added or incorporated already during the polymerization of the polymer component(s). In addition, the silanol condensation catalyst (B) may be provided as such (neat) or, preferably, as a masterbatch, in which the catalyst, and optionally further component(s) such as additives, are dispersed in a polymer, e.g. a polyolefin matrix, in a concentrated form, as already stated above. It is also possible to use different masterbatches, such as a masterbatch containing the silanol condensation catalyst (B) and another masterbatch containing other component(s), such as additive(s).

The FRPC recovered from the compounding, mixing or blending apparatus, e.g. the extruder, can be in the form of pellets or in a powdery state. These pellets or powder can be used to extrude the desired article, such as a cable or wire, in a further extruding step if desired.

Alternatively, the FRPC recovered from the compounding, mixing or blending apparatus, i.e. extruder, can already be in the form of the desired article. That means that the preparation (mixing) and extrusion of the FRPC to form the desired article, such as a cable or wire, can be accomplished in a combined step.

Hence, after feeding into the extruder, the material is rendered homogeneous by mixing, preferably by previously melting the material to facilitate the mixing of the various components. The mixed material (FRPC) is then extruded to form the desired article, such as a wire or cable, and optionally cooled down, for instance by air or by water, and the article is thus obtained. The skilled person can adjust the process parameters such as screw, rotation and temperature as appropriate depending on the specific components and contents of the FRPC, as is customary for a skilled person in the art.

The article obtained by extrusion is then crosslinked to form a crosslinked article, either under ambient conditions or under application of heat. As defined in the present invention, ambient conditions refer to a temperature of 23°C±5°C, preferably 23°C±2°C or 23°C and a relative humidity of 50%±10%, preferably 50%±5% or 50%. The time for crosslinking under ambient conditions is not particularly limited but may range from 1 to 70 days, preferably 2 to 50 days. The crosslinking under ambient conditions simplifies the crosslinking process and reduces costs and environmental impact.

Alternatively, the crosslinking can be performed under application of heat, that is a temperature in a range of 60°C to 90°C, preferably 70°C±5°C, in view of achieving optimal crosslinking speed without excessive use of heating.

Usually, the crosslinking occurs by moisture curing, that is, the silanol groups in the base resin containing hydrolysable silanol groups are hydrolyzed to form hydroxyl groups, which are then crosslinked in a condensation reaction that releases water. Thus, it is preferred that crosslinking under application of heat occurs through steam, sauna or water bath conditions, more preferably through a water bath. The time for crosslinking under application of heat is not particularly limited but may range from 0.1 to 100 h, preferably 0.2 to 75 h.

### Crosslinked Article

The present invention further relates to a crosslinked article comprising the FRPC as described above or below in all its aspects and embodiments. The article may preferably be a wire or cable which comprises at least one layer made of the FRPC of the present invention. That is, the article or the at least one layer comprises or consists the FRPC as described above. Preferably, at least 80.0 wt.-%, more preferably at least 90.0 wt.-%, even more preferably at least 95.0 wt.-% of the article or the layer is made of the FRPC and it also possible and preferred that the film consists of the FRPC. In the present invention, the at least one layer obtained from the FRPC of the present invention is crosslinked.

The article, such as the wire or cable, may be produced by co-extrusion of the different layers onto the conducting core. Then, crosslinking is performed, preferably by moisture curing, wherein the silane groups are hydrolyzed under the influence of water or steam. Moisture curing is preferably performed in a sauna or water bath at a temperatures in the range of 60 to 90°C preferably 70°C±5°C or the crosslinking is performed under ambient conditions.

The flame retardant polymer composition in accordance with the present invention can be extruded around a wire or cable to form an insulating or jacketing layer or can be used as bedding compounds. The flame retardant polyolefin composition is then crosslinked.

The insulating or jacketing layer may the outermost layer of the cable. An insulation layer of a low voltage power cable may have a thickness in the range of 0.4 mm to 3.0 mm, preferably below 2.0 mm, depending on the application. Preferably, the insulation is directly coated onto the electric conductor.

In a preferred embodiment the FRPC according to the invention is comprised in the jacketing layer of a wire or cable, preferably in the jacketing layer of medium voltage (MW) or high voltage (HV) cable. MW and HV cables generally have a conductor, which is surrounded by an inner semiconductive layer, followed by an insulation layer, then an outer semiconducutive layer and a jacketing layer as protective outer layer. MW and HV cables mainly differ in the thickness of the insulation layer. MW cables are usually classified for a maximum permitted voltage Um of 1 kV to 36 kV. HW cables are usually classified for a maximum permitted voltage Um of 36 kV to 230 kV.

All preferred aspects and embodiments of the FRPC as described above shall also apply for the article according to the present invention.

### Examples

The following Examples are included to demonstrate certain aspects and favorable embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in the general disclosure (e.g. claims or description) to give new (more limited or different) ranges without any limitation.

### 1. Measurement methods

The following definitions of terms and measurement methods apply for the above general description of the invention as well as to the below examples unless otherwise defined.

### Hot set test

The crosslinking of the tapes as prepared below under 'Preparation of tapes' is evaluated via hot set test (200°C, 20 N) after 15 minutes as an average of elongation %.

Hot set elongation and permanent deformation are determined on dumbbells prepared according to ISO-527-2-5A. Dumbbells were taken from already crosslinked compressed plaques prepared as described below. The hot set elongation was determined according to IEC 60811-2-1 on dumbbell samples as prepared as described above. In the hot set test, a dumbbell of the tested material is equipped with a weight corresponding to 20 N/cm². This specimen was put into an oven at 200°C and after 5 minutes the elongation was measured. The specimen was then left in the oven with the weight for additional 10 min while the elongation was monitored. Subsequently, the weight was removed and the specimen was left to recover in the oven for additional 5 min before being extracted. Then, the specimen was taken out from the oven and cooled down to ambient temperature. The permanent deformation was determined. In general, a decrease in the average of elongation corresponds to a higher degree of crosslinking.

### Content of comonomer

The comonomer content (wt.-%) of the (polar) comonomer was determined in a known manner based on Fourier transform infrared spectroscopy (FTIR) determination calibrated with ¹³C-NMR as described in Haslam 1, Willis HA, Squirrel DC. Identification and analysis of plastics, 2nd ed. London Iliffe books; 1972. FTIR instrument was a Perkin Elmer 2000, 1scann, resolution 4cm⁻¹. For determination of the comonomers, films with thickness 0.1 mm were prepared. The peak for the used comonomer was compared to the peak of polyethylene as evident for a skilled person (e.g. the peak for butyl acrylate at 3450 cm⁻¹ was compared to the peak of polyethylene at 2020 cm⁻¹). The weight-% can be converted to Mol-% by calculation based on the total moles of polymerizable monomers.

### Content of hydrolyzable silane group

A pellet sample was pressed to a 3 mm thick plaque (150°C for 2 minutes, under pressure of 5 bar and cooled to room temperature). Si-atom content was analyzed by wavelength dispersive XRF (AXS S4 Pioneer Sequential X-ray Spectrometer supplied by Bruker).

Generally, in XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis can be performed. The quantitative methods are calibrated with compounds with known concentrations of the element of interest e.g. prepared in a Brabender compounder. The XRF results show the total content (wt.-%) of Si and can then be calculated as wt.-%- or Mol-%-Content of hydrolysable silane group(s) (Si(Y)3-q).

### 2. Experimental part

### Catalyst

The catalyst is prepared as catalyst masterbatch (MB) by compounding the materials shown in Table 1 (wt.-%) in a Brabender and pelletizing it. MBs were compounded with Thermo Scientific^{™} HAAKE^{™} PolyLab^{™} QCRheomix3000 containing a driving unit with chamber. The kneader has a 310 cm³ chamber with co-rotating roller rotors. The kneading temperature for all the MB was 130°C. Half of the weighted polymer resin was added first in the kneader. After 3 minutes when the polymer resin was fully melted, each additive was subsequently added every 3 minutes. Lastly, the rest of the polymer rein was added into the kneader. After all components had been added to the kneader, the rpm was increased to 20 for 10 minutes for the substances to be kneaded properly.

**Table 1. Catalyst MB**

| Substance | CE1 | CE2 | IE1 | IE2 | IE3 | IE4 | IE5 | IE6 | IE7 |
|---|---|---|---|---|---|---|---|---|---|
| Polyolefin 1 | 92.9 | 90.1 | 86.6 | 88.3 | 86.6 | 88.3 | 91.3 | 92.9 | 93.5 |
| Zinc stearate | 1 | 1 | 1 | 1 | 1 | 1 | | 1 | 1 |
| Phenolic antioxidant(s) | 1.7 | 4.4 | 4.4 | 1.7 | 4.4 | 1.7 | 1.7 | 1.7 | 1.7 |
| HDTMS | 2 | 1 | 1 | 2 | 1 | 2 | 2 | 2 | 2 |
| DOTL | 2.4 | 3.5 | | | | | | | |
| Tin II neododecanoate | | | 7 | 7 | | | 5 | 2.4 | 1.8 |
| Tin II oleate | | | | | 7 | 7 | | | |

Polyolefin 1 is an ethylene butyl acrylate copolymer which has a butyl acrylate comonomer content of 17.0 wt.%, (MFR₂ 190°C = 8 g/10 min, density 925.5 kg/m³) based on the total weight of polyolefin 1, which was produced as follows. Fresh ethylene and recycled ethylene and comonomer butyl acrylate was compressed to reach an initial reactor pressure of 2500 bars in two parallel streams to supply the front and the side of a split feed 2 zone reactor with a varying LID between around 17300 to 30400. Butyl acrylate comonomer was added in amounts to reach 17 wt.-% in the final polymer. An MFR₂ of the final polymer of 8 g/10 min was maintained. After compression, the front stream was heated to 151°C in a preheating section before entering the front zone of the reactor and the side stream was cooled and entered at the side of the reactor. Mixtures of commercially available peroxide radical initiators dissolved in an essentially inert hydrocarbon solvent were injected after the preheating section and at one more position along the reactor in amounts sufficient for the exothermal polymerization reaction to reach peak temperatures of 275°C, and 260°C respectively, with cooling in-between to 170°C. The reaction mixture was depressurised by a pressure control valve, cooled and the polymer was separated from unreacted gas.

HDTMS (hexadecyltrimethoxysilane) is a scorch retarder.

DOTL (dioctyl dilaurate) is a tin (IV) compound used as silane crosslinking catalyst in the comparative examples.

Tin(II) neodecanoate is a tin (II) compound used as a silane crosslinking catalyst of the present invention.

Tin (II) oleate is a tin (II) compound used as a silane crosslinking catalyst of the present invention.

### Polymer composition (PC)

Table 2 shows the recipes of polymer composition to be combined with the catalyst masterbatches to provide the FRPC of the present invention.

**Table 2. Polymer compositions**

| Material (wt.-%) | PC-1 | PC-2 | PC-3 | PC-4 |
|---|---|---|---|---|
| A-1 | - | - | | 99.6 |
| A-2 | 64.7 | - | | - |
| A-3 | - | 20 | 25 | - |
| Elastomer | - | 12.55 | | - |
| HDPE | | | 9.25 | - |
| Polyglue^{®} G300C | - | 5 | | - |
| Polyglue^{®} G270C | | | 4 | - |
| Silicon gum 1 | 3 | - | | - |
| Silicon gum 2 | - | 1 | | |
| HDTMS | 1 | 1 | 1 | 0.35 |
| C-1 (CaCO₃) | 30 | - | | - |
| C-2 (AlOH₃) | | 60 | | - |
| C-3 (Mg(OH)₂) | | | 60 | |
| Antioxidant(s) | 0.5 | 0.45 | 0.45 | 0.05 |
| UV Stabilizer(s) | 0.8 | | 0.3 | |

A-1, which represents the compound (A), is an ethylene-vinyltrimethoxysilane (VTMS) copolymer containing 1.1 wt.-% VTMS.

A-2, which represents the compound (A), is an ethylene-butyl acrylate-VTMS terpolymer (EBA-VTMS, OE41110Si), containing 9.5 wt.-% BA (2.3 Mol-%), 1.05 wt.-% VTMS (0.17 Mol-%). The terpolymer is produced in a tubular front feed with a pressure of 235 MPa and a peak temperature of 260°C.

A-3, which represents the compound (A), is an ethylene-methyl acrylate-VTMS terpolymer (EMA-VTMS, OE2322Si), containing 22.5 wt.-% MA and 1.4 wt.-% VTMS, which was produced as follows. The copolymer of ethylene with methyl acrylate comonomer and vinyl trimethoxy silane comonomer (polymer 1) was produced in a commercial high pressure tubular reactor at a pressure 2500-3000 bar and max temperature 250-300°C using conventional peroxide initiator. Ethylene monomer, methyl acrylate (MA) polar comonomer and vinyl trimethoxy silane (VTMS) comonomer were added to the reactor system in a conventional manner. Chain transfer agent was used to regulate melt flow rate as well known for a skilled person. After having the information of the property balance desired for the final polymer 1, the skilled person can control the process to obtain polymer 1. The amount of the vinyl trimethoxy silane units, VTMS, the amount of methyl acrylate, MA, and MFR₂ are given in below Table 3. The properties in Table 3 were measured from the polymer as obtained from the reactor.

**Table 3: Product properties of A-3**

| Properties of the polymer obtained from the reactor | A-3 |
|---|---|
| MFR_{2,16}, g/10 min | 3.5 |
| Methyl acrylate content, Mol-% (wt.-%) | 8.6 (22.5) |
| Melt Temperature, °C | 90 |
| VTMS content, Mol-% (wt.-%) | 0.27 (1.4) |
| Density, kg/m³ | 946 |
| SHI (0.05/300), 150°C | 52 |

In above Table 3, MA denotes the content of methyl acrylate comonomer present in the polymer and, respectively, VTMS content denotes the content of vinyl trimethoxy silane comonomer present in the polymer.

The elastomer is an ethylene-1-octene based plastomer (Queo^{™} 8201LA) having a MFR of 1.1 g/10min (ISO 1133, 190°C, loading of 2.16 kg) and a density of 883 kg/m³.

HDPE is a high density polyethylene (Borcoat^{™} HE3453) having a MFR (ISO 1133, 190°C, loading of 2.16 kg) of 0.5 g/10min and a density of 939 kg/m³. Polyglue^{®} G300C is a polyethylene-based resin containing anhydride functionality, available from HDC Hyundai EP Co., Ltd.

Polyglue^{®} G270C is a polyethylene-based resin containing anhydride functionality, available from HDC Hyundai EP Co., Ltd.

Silicon gum 1 is a PDMS (polydimethylsiloxane) commercially available from Wacker as PA 445100 VP.

Silicon gum 2 is a polysiloxane, commercially available from Evonik as Tegomer^{®} V-Si 4042.

C-1 (CaCO₃), which represents the compound (C), is a treated ultra-fine calcium carbonate-based filler, available from Omya GmbH as Omya^{®} EXH1 SP.

C-2 (Al(OH)₃) is an uncoated, precipitated aluminum hydroxide-based flame retardant, available from Nabaltec AG as Apyral^{®} 40CD.

C-3 (Mg(OH)₂) is a magnesium hydroxide-based flame retardant, available from Kyowa chemical industries as Kisuma^{®} 5JL.

### Preparation of tapes

The crosslinking of the FRPC were evaluated by hot set test on tapes extruded with a thickness of 1.8 mm.

First, the above catalyst masterbatches (CE1, CE2, IE2 to IE7) were premixed with the above polymer compositions (PC1 to PC4) to provide the FRPC as indicated in the below tables 4 to 11, respectively, then the material was fed it into the extruder. In the first part of the extruder the material melts and then the screw processes the material until it is homogeneous. In the last stage, the material cools down, by air or water, and the tape forms. Depending on the material characteristics, the screw, rotation and temperature are adjusted, more details are available in EP2562768 A1 (Table 2). Then, the tapes were crosslinked either at 70°C in water bath or under ambient conditions (23°C and 50% RH) for different time periods as specified in the below table.

The results (as shown in below tables 4 to 11) are an average of elongation [%] after 15 minutes.

PC-1 is extruded with 5 wt.-% masterbatch (CE1, CE2, IE1, IE2, IE3, or IE4) and crosslinked at 70°C in water bath. Results are shown in Table 4.

**Table 4. BC-1 - water bath**

| Water bath 70°C [h] | CE1 | CE2 | IE1 | IE2 | IE3 | IE4 |
|---|---|---|---|---|---|---|
| 1 | n.m. | n.m. | n.m. | n.m. | n.m. | n.m. |
| 4 | 217 | 420 | 58 | 67 | 116 | 102 |
| 6 | 212 | 251 | 44 | 96 | 77 | 100 |
| 16 | 86 | 175 | 39 | 53 | 59 | 53 |

| | | | | | | |
|---|---|---|---|---|---|---|
| n.m. means 'not measurable (no cross-linking)' | | | | | | |

PC-1 is extruded with 7.5 wt.-% masterbatch (IE1 or IE2) or with 5 wt.-% masterbatch (CE1 or CE2) and crosslinked under ambient conditions. Results are shown in Table 5.

**Table 5. PC-1 - ambient conditions**

| Ambient cond. [days] | CE1 | CE2 | IE1 | IE2 |
|---|---|---|---|---|
| 4 | n.m. | n.m. | 222 | n.m. |
| 7 | n.m. | 478 | 125 | n.m. |
| 14 | n.m. | 397 | 74 | 155 |
| 21 | 220 | 488 | 61 | not measured |
| 28 | 179 | 330 | 96 | not measured |
| 50 | 150 | 298 | 100 | 134 |

| | | | | |
|---|---|---|---|---|
| n.m. means 'not measurable (no cross-linking)' | | | | |

PC-2 is extruded with 3 wt.-% masterbatch (CE1, IE1 or IE6) and crosslinked at 70°C in water bath. Results are shown in Table 6.

**Table 6. PC-2 - water bath**

| Water bath 70°C [h] | CE1 | IE1 | IE6 |
|---|---|---|---|
| 1 | 252 | 57 | not measured |
| 4 | 134 | 46 | not measured |
| 6 | 97 | 43 | not measured |
| 16 | 56 | 34 | 38 |
| 24 | 69 | 24 | 64 |
| 48 | 51 | 20 | 79 |

Under these conditions, MB CE2 proved unsuitable, since it resulted in scorch with PC-2. In contrast, tin (II) neodoecanoate-containing master batches IE1 and IE6 show excellent crosslinking and even for IE6 efficient crosslinking, which contains a lower amount of catalyst.

PC-2 is extruded with 5 wt.-% masterbatch (CE1, IE1 or IE6) and crosslinked under ambient conditions. Results are shown in Table 7.

**Table 7. PC-2 - ambient conditions**

| Ambient cond. [days] | CE1 | IE1 | IE6 |
|---|---|---|---|
| 4 | n.m. | 41 | n.m. |
| 7 | 165 | 43 | n.m. |
| 14 | 114 | 26 | n.m. |
| 21 | 100 | 30 | 102 |
| 28 | 77 | 21 | 101 |

| | | | |
|---|---|---|---|
| n.m. means 'not measurable (no cross-linking)' | | | |

Tin (II) neodoecanoate-containing master batches IE1 and IE6 show excellent crosslinking even under ambient conditions, and even for IE6 efficient crosslinking, which contains a lower amount of catalyst.

PC-3 is extruded with 3 wt.-% masterbatches (CE1 or IE5) and crosslinked under ambient conditions (results shown in Table 8) and crosslinked at 70°C in water bath (results shown in Table 9).

**Table 8. PC-3 - ambient conditions**

| Ambient cond. [days] | CE1 | IE5 |
|---|---|---|
| 4 | 121 | not measured |
| 7 | 106 | not measured |
| 14 | 70 | 56 |
| 21 | 54 | 43 |
| 28 | 48 | 41 |

**Table 9. PC-3 - water bath**

| Water bath 70°C [h] | CE1 | IE5 |
|---|---|---|
| 48 | 24 | 37 |

Tables 8 and 9 show that inventive IE5 crosslinks under ambient conditions more efficiently than comparative DOTL-containing CE1 and crosslinks good in water bath at 70°C.

PC-4, which does not contain flame retardant inorganic filler (unfilled), is extruded with 5 wt.-% masterbatches (CE1, IE6 or IE7) and crosslinked at 70°C in water bath. Results are shown in Table 10.

**Table 10. PC-4 - water bath**

| Water bath 70°C [h] | CE1 | IE6 | IE7 |
|---|---|---|---|
| 48 | 40.5 | 34.1 | 35.2 |

Table 10 shows that even a stoichiometric amount of catalyst can efficiently catalyze the crosslinking of unfilled PC-4 with better results compared to DOTL-containing CE1 (2.4 wt.-% for DOTL versus 1.8 wt.-% for Sn(II) neodecanoate in IE7).

PC-4, which does not contain flame retardant inorganic filler (unfilled), is extruded with 5 wt.-% masterbatch and crosslinked under ambient conditions. Results are shown in Table 11.

**Table 11. PC-4 - ambient conditions**

| Ambient cond. [days] | CE1 | IE5 |
|---|---|---|
| 4 | n.m. | n.m. |
| 7 | n.m. | 125 |
| 14 | n.m. | not measured |
| 21 | n.m. | 136 |
| 28 | 338 | 98 |

| | | |
|---|---|---|
| n.m. means 'not measurable (no cross-linking)' | | |

Table 11 shows that that the silanol condensation catalyst, tin(II) neodecanoate, can succeed in crosslink tapes within all specifications (even unfilled polymer compositions) within 28 days, whereas DOTL-containing CE1 shows insufficient crosslinking after 28 day under ambient conditions.

As apparent from the data above, the silanol condensation catalyst of the present invention being an inorganic tin (II) compound in which the tin atom has no covalent bond to a carbon atom, such as tin (II) oleate and tin (II) neodecanoate, can more efficiently crosslink a variety of polymer compositions containing crosslinkable polyolefin base resin containing hydrolysable silane groups, both under application of moderate heat (water bath at 70°C) and even under ambient conditions.

That is, the data shows that tin(II) silanol condensation catalysts, such as tin (II) neodecanoate and tin (II) oleate, can efficiently crosslink both polyolefin compositions containing an inorganic filler as a flame retardant (Tables 3 to 8), and those not containing any inorganic filler (Tables 9 and 10), both in a water bath at 70°C and especially even under ambient conditions, with tin (II) neodecanoate and tin (II) oleate, especially tin (II) neodecanoate, showing greater efficiency than DOTL.

Based on these unexpected findings, the present invention has been completed.

## Claims

1. A flame retardant polyolefin composition comprising
(A) at least one crosslinkable polyolefin base resin containing hydrolysable silane groups, wherein the polyolefin base resin is polyethylene or polypropylene,
(B) at least one silanol condensation catalyst, and
(C) at least one flame retardant inorganic filler,
wherein the silanol condensation catalyst is an inorganic tin (II) compound in which the tin atom has no covalent bond to a carbon atom.

2. The flame retardant polyolefin composition according to claim 1, wherein the at least one flame retardant inorganic filler (C) is selected from calcium carbonate, aluminium hydroxide and magnesium hydroxide or a combination thereof.

3. The flame retardant polyolefin composition according to claim 1 or 2, wherein the at least one crosslinkable polyolefin base resin containing hydrolysable silane groups (A) is a terpolymer comprising a polar comonomer, which is preferably an alkyl acrylate comonomer.

4. The flame retardant polyolefin composition according any one of claims 1 to 3, wherein the flame retardant polyolefin composition further comprises at least one scorch retardant.

5. The flame retardant polyolefin composition according to any one of claims 1 to 4, wherein the at least one crosslinkable polyolefin base resin containing hydrolysable silane groups (A) contains the hydrolysable silane groups in an amount of 0.1 to 3.0 wt.-% based on the total weight of the crosslinkable polyolefin resin, and/or wherein the hydrolysable silane groups are selected from trimethoxy silane groups, triethoxysilane groups and a mixture thereof.

6. The flame retardant polyolefin composition according to any one of claims 1 to 5, wherein the at least one silanol condensation catalyst (B) is represented by the following formula (II):
[R¹COO]Sn[OOCR²] (II)
wherein R¹ and R² independently represent a straight or branched, saturated or unsaturated hydrocarbyl group having 2 to 30 carbon atoms, preferably 8 to 20 carbon atoms.

7. The flame retardant polyolefin composition according to claim 6, wherein the at least one silanol condensation catalyst (B) is selected from tin (II) oleate, tin (II) neodecanoate and a mixture thereof.

8. The flame retardant polyolefin composition according to any one of claims 1 to 7, which contains, based on the total mass of the flame retardant polyolefin composition,
(A) the at least one crosslinkable polyolefin base resin containing hydrolysable silane groups in an amount of 10.0 to 75.0 wt.-%, preferably 15.0 to 70.0 wt.-%,
(B) the at least one silanol condensation catalyst in an amount of 0.01 to 2.0 wt.-%, preferably 0.02 to 1.0 wt.-%, and
(C) the at least one flame retardant inorganic filler in an amount of 15.0 to 70.0 wt.-%, preferably 20.0 to 65.0 wt.-%.

9. The flame retardant polyolefin composition according to claim 8, containing, based on the total mass of the flame retardant polyolefin composition,
(A) the at least one crosslinkable polyolefin base resin containing hydrolysable silane groups in an amount of 45.0 to 75.0 wt.-%, preferably 50.0 to 70.0 wt.-%, wherein the at least one crosslinkable polyolefin base resin containing hydrolysable silane groups is a terpolymer comprising a butyl acrylate comonomer, such as an ethylene butyl acrylate (EBA)-based copolymer containing hydrolysable silane groups,
(B) the at least one silanol condensation catalyst in an amount of 0.05 to 2.0 wt.-%, preferably 0.1 to 1.0 wt.-%, and
(C) the at least one flame retardant inorganic filler in an amount of 15.0 to 40.0 wt.-%, preferably 20.0 to 35.0 wt.-%, wherein the at least one flame retardant inorganic filler is a carbonate metal salt, such as calcium carbonate; or
containing, based on the total mass of the flame retardant polyolefin composition,
(A) the at least one crosslinkable polyolefin base resin containing hydrolysable silane groups in an amount of 10.0 to 35.0 wt.-%, preferably 15.0 to 30.0 wt.-%, wherein the crosslinkable polyolefin base resin containing hydrolysable silane groups is a terpolymer comprising a methyl acrylate comonomer, such as an ethylene methyl acrylate (EMA)-based copolymer containing hydrolysable silane groups,
(B) the at least one silanol condensation catalyst in an amount of 0.01 to 1.0 wt.-%, preferably 0.02 to 0.75 wt.-%, and
(C) the at least one flame retardant inorganic filler in an amount of 40.0 to 70.0 wt.-%, preferably 45.0 to 65.0 wt.-%, wherein the at least one flame retardant inorganic filler is a hydroxide metal salt, such as aluminum hydroxide or magnesium hydroxide.

10. Use of tin (II) oleate, tin (II) neo decanoate or mixtures thereof, preferably tin (II) neodecanoate, for crosslinking a polyolefin composition containing at least one crosslinkable polyolefin base resin containing hydrolysable silane groups, at ambient conditions or under application of heat.

11. The use according to claim 10, wherein the polyolefin composition further contains at least one inorganic basic filler as flame retardant compound and/or at least one scorch retardant.

12. A process for producing a crosslinked article, comprising the steps of
- providing the flame retardant polyolefin composition according to any of claims 1 to 9,
- extruding the composition to form an article,
- optionally cooling down the article, and
- crosslinking the article either under application of heat or at ambient conditions to form a crosslinked article.

13. Crosslinked article comprising the flame retardant polyolefin composition according to any of claims 1 to 9.

14. Article according to claim 13 being a wire or cable comprising at least one layer made of the flame retardant polyolefin composition according to any of claims 1 to 9, the article preferably being a low, medium or high voltage power cable.

15. Article according to claim 14, wherein the article is a cable and the at least one a layer is a jacketing layer or an insulating layer.
